(19) Europäisches Patentamt
European Patent Office
Office européen des brevets

(11) **EP 2 162 788 B1**

(12) **EUROPÄISCHE PATENTSCHRIFT**

(45) Veröffentlichungstag und Bekanntmachung des Hinweises auf die Patenterteilung:
**30.05.2012 Patentblatt 2012/22**

(21) Anmeldenummer: **08774229.2**

(22) Anmeldetag: **23.06.2008**

(51) Int Cl.:
*G02F 1/225* (2006.01)          *G02F 1/21* (2006.01)
*G02B 6/34* (2006.01)          *G02B 6/10* (2006.01)

(86) Internationale Anmeldenummer:
**PCT/EP2008/057966**

(87) Internationale Veröffentlichungsnummer:
**WO 2009/003864 (08.01.2009 Gazette 2009/02)**

(54) **VERFAHREN UND VORRICHTUNG ZUR KOMPENSATION VON POLARISATIONSABHÄNGIGER FREQUENZVERSCHIEBUNG IN OPTISCHEN WELLENLEITERN**

METHOD AND APPARATUS FOR COMPENSATING POLARIZATION-DEPENDENT FREQUENCY SHIFTS IN OPTICAL WAVEGUIDES

PROCÉDÉ ET DISPOSITIF DE COMPENSATION DU DÉCALAGE DE FRÉQUENCE DÉPENDANT DE LA POLARISATION DANS LES GUIDES D'ONDES OPTIQUES

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **04.07.2007 DE 102007031864**

(43) Veröffentlichungstag der Anmeldung:
**17.03.2010 Patentblatt 2010/11**

(73) Patentinhaber: **Fraunhofer-Gesellschaft zur Förderung der angewandten Forschung e.V.
80686 München (DE)**

(72) Erfinder:
• **SCHELL, Martin**
  **10437 Berlin (DE)**
• **YAO, Huihai**
  **10587 Berlin (DE)**
• **KEIL, Norbert**
  **14089 Berlin (DE)**
• **ZAWADZKI, Crispin**
  **12309 Berlin (DE)**

(74) Vertreter: **Goeden, Christian et al
Andrae Flach Haug
Patentanwälte
Balanstrasse 55
81541 München (DE)**

(56) Entgegenhaltungen:
**EP-A- 0 756 184      EP-A- 1 286 192
GB-A- 2 269 678**

• **CAPPUZZO M ET AL: "Potentially Inexpensive 10-Gb/s Tunable Dispersion Compensator With Low Polarization Sensitivity" IEEE PHOTONICS TECHNOLOGY LETTERS, IEEE SERVICE CENTER, PISCATAWAY, NJ, US, Bd. 16, Nr. 5, 1. Mai 2004 (2004-05-01), Seiten 1340-1342, XP011111596 ISSN: 1041-1135**
• **TAKIGUCHI K ET AL: "Planar lightwave circuit dispersion equaliser module with polarisation insensitive properties" ELECTRONICS LETTERS, IEE STEVENAGE, GB, Bd. 31, Nr. 1, 5. Januar 1995 (1995-01-05), Seiten 57-58, XP006002298 ISSN: 0013-5194**

**Beschreibung**

Die Erfindung betrifft ein Verfahren und eine Vorrichtung zur Kompensation der polarisationsabhängigen Verschiebung der Mittenfrequenz in einem optischen Filter, welcher ein Mach-Zehnder - interferometer enthält, durch Kompensation der Doppelbrechung in mindestens einem Wellenleiter des Interferometers, wobei mindestens ein $\lambda/2$-Plättchen in den Strahlengang des Interferometers eingebracht und der mindestens eine Wellenleiter im Strahlengang hinter kw. rechts und im Strahengang vor kw. links des $\lambda/2$-Plättchens wenigstens abschnittsweise auf eine vorgebbare Temperatur gebracht wird.

Interferometer werden bei der optischen Nachrichtenübertragung in verschiedenen Anwendungen eingesetzt, wie z.B. in optischen Schaltern, in variablen optischen Dämpfungsgliedern, in optischen Modulatoren, in Demultiplexem von OTDM-Systemen, in DPSK-Verfahren, in DQPSK-Verfahren sowie in verschiedenen Sensoranwendungen. Meist handelt es sich dabei um Mach-Zehnder-Interferometer, jedoch sind auch Michelson-Interferometer gebräuchlich.

Aus der EP 1 286 192 A2 ist bekannt, Mach-Zehnder-Interferometer zusammen mit weiteren aktiven oder passiven Bauelementen in planar integrierten Schaltkreisen zusammen zu fassen. Solche in planar integrierten Schaltkreisen integrierte Mach-Zehnder-Interferometer sind kompakt, leicht steuerbar und preiswert.

Derartige Mach-Zehnder-Interferometer weisen jedoch in optischen Filtern oder Schaltern ein Übertragungsverhalten auf, welches von der Polarisation des einfallenden Lichtes abhängt. Diese Polarisationsabhängigkeit begrenzt den Einsatzbereich integrierter Mach-Zehnder-Interferometer in der optischen Nachrichtentechnik bei hohen Bandbreiten und/oder hohen Übertragungsraten. Für Anwendungen in DPSK-, DQPSK-, OTDM- oder ähnlichen Systemen sind die Anforderungen an die Polarisationsunabhängigkeit des Übertragungsverhaltens besonders hoch, um eine zuverlässige Demodulation eines eintreffenden Datenstromes zu ermöglichen. Bei herkömmlichen Mach-Zehnder-Interferometern, welche als optischer Filter oder Schalter in planar integrierten Schaltkreisen verwendet werden, tritt dagegen eine polarisationsabhängige

Verschiebung der Mittenfrequenz (PDFS) auf, welche so groß ist, dass herkömmliche Mach-Zehnder-Interferometer den Anforderungen in DPSK-, DQPSK- und OTDM-Systemen oftmals nicht genügen.

Beispielsweise werden für die Demodulation auf Empfängerseite in OTDM-, DPSK- oder DQPSK-Systemen Verzögerungsleitungs-Interferometer (Delay Line Interferometer = DLI) eingesetzt. Die zulässige PDFS eines solchen DLI in einem DQPSK-System liegt bei etwa $\pm 200$ MHz für eine Bit-Rate von 40 Gb/s. Eine solche PDFS erfordert die Begrenzung der Doppelbrechung in den optischen Pfaden des Interferometers auf ca. $\pm 2\times 10^{-6}$ im C- und L-Band.

Für Mach-Zehnder-Interferometer in planar integrierten Schaltkreisen beträgt die Doppelbrechung der Wellenleiter etwa BWG $\sim 10^{-3}$ und dementsprechend liegt die PDFS etwa bei etwa $\pm 100$ GHz. Diese Doppelbrechung ist hauptsächlich spannungsinduziert. Daher verändert sie sich linear mit der Temperatur. Die entsprechende Steigung (in diesem Fall der Abfall) S bestimmt sich nach $S = B_{WG}/\Delta T_{Proc}$, mit $\Delta T_{proc} = T_f$- $T_0$, als die Differenz aus der Endtemperatur des Herstellungsprozesses $T_f$ und der Einsatztemperatur $T_0$. Der Wert von S ist stets negativ und liegt im Bereich von etwa -10^{-5}/K bei Wellenleitern aus Polymer, wobei diese typischerweise eine Temperaturdifferenz $\Delta T_{Proc}$ von etwa 100 bis 200 K aufweisen.

Zur Begrenzung der PDFS ist aus dem Stand der Technik bekannt, ein Mach-Zehnder-Interferometer mit einem $\lambda/2$-Plättchen aus Polyimid auszustatten, welches in etwa in der Mitte des optischen Übertragungsweges angeordnet ist. Das $\lambda/2$-Plättchen bewirkt dabei eine Drehung der Polarisationsrichtung, so dass sich die PDFS im ersten Teil des Interferometers und im zweiten Teil des Interferometers ausgleichen können. Der Ausgleich ist jedoch in der Praxis unvollständig, so dass ein so ausgestattetes Interferometer eine PDFS von etwa $\pm 1000$ MHz erreicht. Dies bedeutet, dass die Doppelbrechung etwa $10^{-5}$ beträgt.

Allerdings reicht diese Maßnahme nicht aus, um die oben skizzierten Anforderungen an die PDFS in einem DQPSK-System zu erfüllen.

Die Aufgabe der vorliegenden Erfindung besteht daher darin, ein Verfahren und eine Vorrichtung zur Verringerung der polarisationsabhängigen Verschiebung der Mittenfrequenz (PDFS) in optischen Filtern bereitzustellen, mit welchem eine im Vergleich zum Stand der Technik erhöhte Datenrate und/oder Bandbreite in OTDM-, DPSK- oder DQPSK-Systemen erzielbar ist.

Die Aufgabe wird gelöst durch ein Verfahren nach Anspruch 1.

Weiterhin besteht die Lösung der Aufgabe in einem Interferometer nach Anspruch 8.

Zweckmäßige Ausgestaltungen der Erfindung sind in den Unteransprüchen enthalten.

Erfindungsgemäß ist vorgesehen, bei dem Verfahren zur Kompensation von polarisationsabhängiger Frequenzverschiebung in optischen Wellenleitern, in den Strahlengang eines Wellenleiters mindestens ein $\lambda/2$-Plättchen einzubringen und den optischen Wellenleiter auf beiden Seiten des $\lambda/2$-Plättchens in vorgebbaren Bereichen zu erhitzen. Die Wellenleiter werden dazu wenigstens abschnittsweise auf vorgebbare Temperaturen gebracht. Dies wird erreicht, indem der Wellenleiter rechts und links des $\lambda/2$-Plättchens durch mindestens zwei Heizelemente mit Wärme beaufschlagt wird. Bei den Heizelementen kann es sich beispielsweise um Heizelektroden handeln.

In der Erfindung ist vorgesehen, dass die spannungsinduzierte Doppelbrechung des Wellenleiters und damit die nach Einbau des λ/2-Plättchens verbleibende PDFS des Mach-Zennder-Interferometers kompensiert wird, indem die Abschnitte rechts des λ/2-Plättchens auf eine erste Temperatur $T_1$ und die Abschnitte links des λ/2-Plättchens auf eine zweite, von $T_1$ verschiedene Temperatur $T_2$ gebracht werden. Vorzugsweise handelt es sich bei den Abschnitten auf jeder Seite des λ/2-Plättchens jeweils um zusammenhängende Abschnitte, so dass ein zusammenhängender Abschnitt auf der rechten und ein zusammenhängender Abschnitt auf der linken Seite des λ/2-Plättchens durch die Heizelemente erwärmt werden.

Durch die Erwärmung der Wellenleiter ändert sich deren Länge und/oder der Brechungsindex und/oder die spannungsinduzierte Doppelbrechung, so dass eine verbleibende Asymmetrie der optischen Pfade rechts und links des λ/2-Plättchens durch unterschiedliche Erwärmung ausgeglichen werden kann.

In einer Ausführungsform der Erfindung ist vorgesehen, dass die Abschnitte rechts und links des λ/2-Plättchens jeweils die Heizelektrode mit gleicher Länge δ|1 aufweisen und $T_1$ und $T_2$ folgende Bedingung erfüllen:

$$T_2 - T_1 = (B_{res}/B_{WG})*\Delta T_{Proc} * (L/\delta|1) ,$$

wobei

$B_{res}$:    die zu der Rest-PDFS korrespondierende Doppelbrechung,
$B_{WG}$:    die Doppelbrechung des Wellenleiters,
$\Delta T_{Proc}$:    die Differenz aus der Prozesstemperatur und der Raumtemperatur und
L:    die Länge des Wellenleiters

darstellen.

Das Verfahren kannt in der erfindungsgemäßen Anordnung zur Anwendung, welche dadurch ausgezeichnet ist, dass der Wellenleiter in ein Mach-Zehnder-Interferometer integriert ist. In diesem Falle wird die Länge des oberen Armes des Mach-Zehnder-Interferometers durch (L + ΔL) angegeben, so dass sich für den oberen Arm des Mach-Zehnder-Interferometers eine Temperaturdifferenz von

$$T_2 - T_1 = (B_{res}/B_{WG})*\Delta T_{Proc} * \{(L + \Delta L)/\delta|1\} ,$$

ergibt. Für das Mach-Zehnder-Interferometer mit einer Verzögerungsleitung in DQPSK Empfängern muss der Laufzeitunterschied zwischen den beiden Armen des Mach-Zegnder-Interferometers für die Zeitdauer des Symbols übereinstimmen. Hierzu wird die Heizelektrode benötigt um die Differenz der Weglänge abzustimmen. Dazu wird die Temperatur $T_{DLI}$ eingebracht, die erforderlich ist, um die Differenz der Weglänge zu korrigieren.

Eine Ausführungsform der Erfindung sieht folgende Kombination vor: die Abschnitte des Wellenleiters rechts (oder links) des λ/2-Plättchens mit einer Temperatur $T_{DLI}$, vermindert um die Hälfte der zur Kompensation der PDFS erforderlichen Temperaturdifferenz $\Delta T = T_2 - T_1$, zu beaufschlagen, sowie die Abschnitte des Wellenleiters links (bzw. rechts) des λ/2-Plättchens mit einer Temperatur $T_{DLI}$, erhöht um die Hälfte der Temperaturdifferenz ΔT zu beaufschlagen. Es ergeben sich somit Temperaturen von ($T_{DLI}$ - ΔT/2) bzw. ($T_{DLI}$ + ΔT/2).

Für Polymerwellenleiter wird wegen des hohen thermo-optischen Koeffizienten und der geringen thermischen Leitfähigkeit des Polymermaterials nur eine geringe elektrische Leistung benötigt, um einen weiten Abstimmbereich abzudecken.

Beim Einsatz der Erfindung in Mach-Zelinder-Interferometern erweist es sich als vorteilhaft, wenn in den Strahlengang der Wellenleiter in beiden Armen des Mach-Zehnder-Interferometers ein λ/2-Plättchen eingebracht wird. Mit einer solchen Ausführungsform lässt sich die PDFS des Mach-Zehnder-Interferometers weiter als bisher bekannt kompensieren, indem sowohl im oberen Arm, als auch im unteren Arm des Mach-Zehnder-Interferometer der Wellenleiter rechts und links des λ/2-Plättchens wenigstens abschnittsweise mit vorgebbaren Temperaturen beaufschlagt wird, indem diese Abschnitte in Wärmeaustauschkontakt mit jeweils wenigstens einem Heizelement gebracht werden. Der technische Aufwand dieser beispielhaften Anordnung wird reduziert, wenn die Wellenleiter rechts von dem λ/2-Plättchen in beiden Armen das Mach-Zehnder-Inter-fero-meter zumindest abschnittsweise auf die gleiche Temperatur $T_r$, vorzugsweise $T_r$ = $T_{DLI}$ - ΔT/2, gebracht werden, und ebenso die beiden Wellenleiter links von dem λ/2-Plättchen auf die gleiche Temperatur $T_1$, vorzugsweise $T_1$ = $T_{DLI}$ + ΔT/2, gebracht werden. Dies kann erreicht werden durch eine entsprechende Wahl der Länge der Abschnitte, die erhitzt werden, bzw. der Länge der jeweiligen Heizelemente.

Die erhitzten Abschnitte auf jeder Seite des λ/2-Plättchens können aus mehreren zusammenhängenden Abschnittsteilen bestehen. Vorzugsweise jedoch wird rechts und links des λ/2-Plättchens jeweils ein zusammenhängender Abschnitt erhitzt. Entsprechend wird auf jeder Seite pro Wellenleiter nur ein Heizelement benötigt. Wenn die Länge der im oberen Arm erhitzten Abschnitte (bzw. die Länge der Heizelemente) rechts und links jeweils $\delta|1$ beträgt, so muss die Länge der in dem unteren Arm erhitzten Abschnitte (bzw. die Länge der Heizelemente) rechts und links des $\lambda/2$-Plättchens jeweils $\delta|2 = \delta|1*L/(L + \Delta L)$ betragen.

Durch die Erfindung gelingt es die Doppelbrechung von $10^{-5}$, die durch den Einsatz von $\lambda/2$-Plättchen aus Polyimid ermöglicht wird, weiter zu verringern. Indem bei Einsatz der Erfindung Werte in der Größenordnung $10^{-6}$ für die Doppelbrechung erreicht werden, können die hohen Anforderungen an Wellenleitern in planar integrierten Schaltkreisen in DQPSK-Systemen oder anderen Bereichen erfüllt werden.

In einer Ausführungsform der Anordnung ist die Anordnung mit einer Datenverarbeitungseinrichtung zur Steuerung der Temperaturen der Heizelemente kombiniert.

Ein Computerprogramm ermöglicht es einer Datenverarbeitungseinrichtung, nachdem es in den Speicher der Datenverarbeitungseinrichtung geladen worden ist, ein Verfahren zur Kompensation von polarisationsabhängiger Frequenzverschiebung in optischen Wellenleitern durchzuführen, wobei der Wellenleiter rechts und links des $\lambda/2$-Plättchens wenigstens abschnittsweise auf vorgebbare Temperaturen gebracht wird. Das Computerprogramm dient vorzugsweise dazu, die Temperaturen konstant zu halten.

Solche Computerprogramme können beispielsweise (gegen Gebühr oder unentgeltlich, frei zugänglich oder passwortgeschützt) downloadbar in einem Daten- oder Kommunikationsnetz bereitgestellt werden. Die so bereitgestellten Computerprogramme können dann durch ein Verfahren nutzbar gemacht werden, bei dem ein Computerprogramm aus einem elektronischen Datennetz, wie beispielsweise aus dem Internet, auf eine an das Datennetz angeschlossene Datenverarbeitungseinrichtung heruntergeladen wird.

Um das erfindungsgemäße Verfahren zur Kompensation von polarisationsabhängiger Frequenzverschiebung in optischen Wellenleitern durchzuführen, ist vorgesehen, ein computerlesbares Speichermedium einzusetzen, auf dem ein Programm gespeichert ist, das es einer Datenverarbeitungseinrichtung ermöglicht, nachdem es in den Speicher der Datenverarbeitungseinrichtung geladen worden ist, ein Verfahren zur Kompensation von polarisationsabhängiger Frequenzverschiebung in optischen Wellenleitern durchzuführen, wobei der Wellenleiter rechts und links des $\lambda/2$-Plättchens wenigstens abschnittsweise auf vorgebbare Temperaturen gebracht wird.

Die Erfindung wird nachfolgend unter Bezugnahme auf die Figuren der Zeichnungen an einem Ausführungsbeispiel näher erläutert. Es zeigen

Figur 1      eine Temperatur-Doppelbrechung-Kurve eines Polymer-Wellenleiters,

Figur 2      schematische Veranschaulichung einer Ausführungsform der Erfmdung.

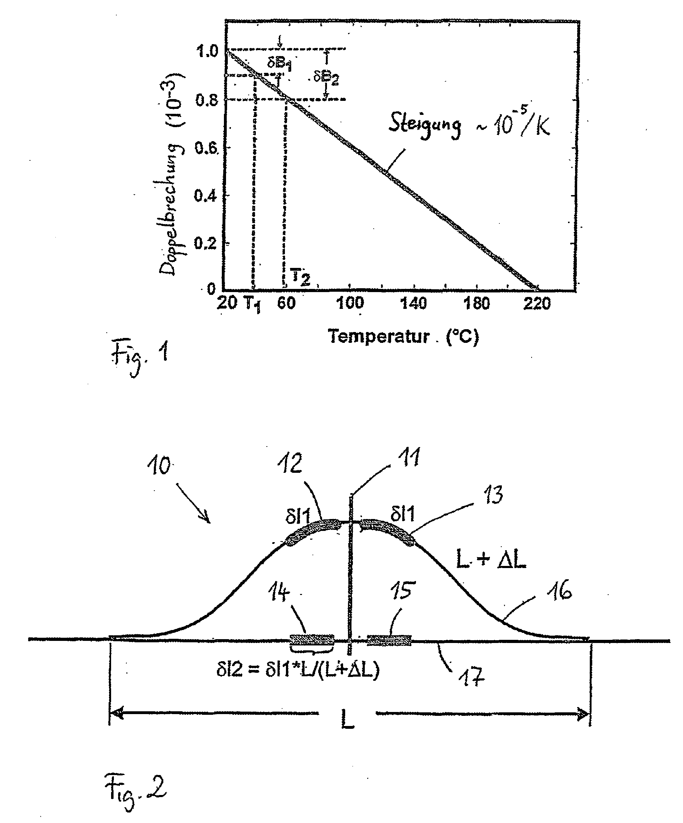

In Figur 1 ist der Verlauf einer Temperatur-Doppelbrechung-Kurve eines Polymer-Wellenleiters dargestellt. Die Steigung der Kurve der Doppelbrechung liegt für Polymer-Wellenleiter im Bereich von $-10^{-5}/K$. Wenn die Temperatur des Wellenleiters 16 von Raumtemperatur $T_0 = 20°C$ auf $T_1$ erhöht wird, verringert sich die Doppelbrechung des Wellenleiters 16 um den Wert $\delta B_1 = |S*(T_1 - T_0)|$, wobei $S$ die Steigung der Kurve darstellt. Die entsprechende Polarisationsphasenverschiebung beträgt:

$$\Delta\phi_1 = 2\pi/\lambda * \delta B_1 * \delta|1 \ ,$$

wobei $\delta|1$ die Länge des Heizelements 12 ist. Der Wert $\Delta\phi_1$ ist stets negativ bei einer Temperaturerhöhung. Allerdings wird diese Phasenverschiebung durch das Passieren des $\lambda/2$-Plättchens 11 in eine positive Doppelbrechung überführt, was durch $+|\Delta\phi_1|$ ausgedrückt wird. Die rechte Heizelektrode 13 wird bis zu einer Temperatur $T_2$ erhitzt, so dass sich für die Änderung der Doppelbrechung des Wellenleiters 16 ergibt: $\delta B_2 = |S*(T_2 - T_0)|$. Die korrespondierende Phasenverschiebung ist dann:

$$\Delta\phi_2 = 2\pi/\lambda * \delta B_2 * \delta|1 \ .$$

Die induzierte Polarisationsphasenverschiebung der beiden Heizelemente 12, 13 kann somit wie folgt angegeben werden:

$$\Delta\phi_2 - \Delta\phi_1 = 2\pi/\lambda * (\delta B_2 - \delta B_1) * \delta|1 \ .$$

Die restliche PDFS kann als verbleibende Polarisationsphasenverschiebung betrachtet werden:

$$\Delta\Phi_{res} = 2\pi/\lambda * B_{res} * (L + \Delta L) \ ,$$

wobei L die Länge des unteren (kürzeren) Arms 17 und (L + $\Delta$L) die Länge des oberen (längeren) Arms 16 des Mach-Zehnder-Interferometers angeben.

Für eine vollständige Kompensation der Phasenverschiebung muss $\Delta\Phi_{res}$ + ($\Delta\phi_1$ - $\Delta\phi_2$) = 0 gesetzt werden, d.h.:

$$2\pi/\lambda * B_{res} * (L + \Delta L) = 2\pi/\lambda * S * (T_2 - T_1) * \delta|1 \ ,$$

woraus sich folgende Temperaturdifferenz für die Heizelemente 12, 13 ergibt:

$$T_2 - T_1 = (B_{res}/B_{WG}) * \Delta T_{Proc} * \{(L + \Delta L)/\delta|1\} \ .$$

In Abhängigkeit vom Vorzeichen von $B_{res}$ wird die Differenz $T_2$ - $T_1$ positiv oder negativ sein. Der Quotient $B_{res}/B_{WG}$ wird etwa im Bereich von $10^{-2}$ bis $10^{-3}$, $\Delta T_{Proc}$ etwa im Bereich von 100 bis 200K, der Längenfaktor {(L + $\Delta$L) /$\delta$|1} etwa im Bereich von 10 liegen. Man sieht, dass eine Temperaturdifferenz von nur wenigen Grad ausreicht, um die verbleibende Doppelbrechung des DLI auszugleichen.

Für Mach-Zehnder-Interferometers mit einer Verzögerungslinie in DQPSK-Empfängern wird eine Heizelektrode benötigt, welche die Frequenzverschiebung zwischen der optischen Quelle und dem DLI kompensiert durch eine exakte Abstimmung der Weglängendifferenz der Verzögerungslinie. Für Polymerwellenleiter wird wegen des hohen thermo-optischen Koeffizienten und der geringen thermischen Konduktivität des Polymermaterials nur eine geringe elektrische Leistung benötigt, um bereits einen weiten Ausgleichsbereich abzudecken.

Für Fälle, bei denen ein $\lambda$/2-Plättchen 11 eingesetzt wird, werden die oberen Heizelektroden 12, 13 zum Abgleich der Weglänge vorteilhafterweise links und rechts von dem $\lambda$/2-Plättchen 11 angeordnet. Der Abgleicheffekt zur Kompensation der PDFS kann dabei erreicht werden, indem beide Heizelektroden 12, 13 auf unterschiedliche Temperaturen erhitzt werden. Wird zur Kompensation der Längendifferenz die Temperatur des Wellenleiters beispielsweise auf den Wert $T_{DLI}$ gebracht und zur Kompensation der PDFS eine Temperaturdifferenz von $\Delta T = T_2 - T_1$ benötigt, so sieht eine beispielhafte Ausführungsform vor, die Heizelektroden 12, 13 auf die Temperaturen ($T_{DLI}$ - $\Delta T/2$) bzw. ($T_{DLI}$ + $\Delta T/2$) zu bringen. Da keine spezielle Struktur erforderlich ist, wird durch die Erfindung eine kompakte und preiswerte Lösung mit geringen Stromverbrauch bereitgestellt.

In Figur 2 ist eine schematische Darstellung einer beispielhaften Ausführungsform der Erfindung zum Abgleichen der Doppelbrechung dargestellt. In dieser beispielhaften Ausführungsform wird ein integriertes Mach-Zehnder-Interferometer 10 mit Polymer-Wellenleitern eingesetzt, welches mit einem $\lambda$/2-Plättchen 11 und vier Heizelementen 12, 13, 14, 15 kombiniert ist. Die Wegdifferenz des Mach-Zehnder-Interferometers sei $\Delta$L, die Länge jedes Heizelements 12, 13 im oberen Arm 16 sei $\delta$|1. Diese beiden Heizelemente 12, 13 im oberen Arm 16 können nicht nur für die Kompensation der PDFS, sondern auch für die Kompensation der Weglänge genutzt werden.

Um die PDFS im gesamten Mach-Zehnder-Interferometer 10 zu kompensieren, muss der untere Arm 17 gleichzeitig durch zwei Heizelemente 14, 15 ausgeglichen werden. Wenn die Heizelemente 14, 15 des unteren Arms 17 auf die gleiche Temperatur wie die Heizelemente 12, 13 des oberen Arms 16 erhitzt werden sollen, müssen die Heizelemente 14, 15 des unteren Arms 17 eine Länge von $\delta$|2 = $\delta$|1*L/(L + $\Delta$L) aufweisen.

Die Erfindung beschränkt sich in ihrer Ausführungsform nicht auf die vorstehend angegebenen bevorzugten Ausführungsbeispiele. Vielmehr ist eine Anzahl von Varianten denkbar, die von der erfindungsgemäßen Anordnung und dem erfindungsgemäßen Verfahren Gebrauch machen.

Bezugszeichenliste

| 10 | Mach-Zehnder-Interferometer |
|----|------|
| 11 | $\lambda/2$-Plättchen |
| 12 | Heizelement |
| 13 | Heizelement |
| 14 | Heizelement |
| 15 | Heizelement |
| 16 | Wellenleiter, oberer Arm des Mach-Zehnder-Interferometers |
| 17 | Wellenleiter, unterer Arm des Mach-Zehnder-Interferometers |

**Patentansprüche**

1. Verfahren zur Kompensation der polarisationsabhängigen Verschiebung der Mittenfrequenz in einem optischen Filter durch zumindest teilweise Kompensation der Doppelbrechung des Filters, wobei der Filter folgende Elemente enthält:

   ein Mach-Zehnder-Interferometer (10), welches einen längeren (16) und einen kürzeren Arm (17) enthält, wobei zumindest einer dieser Arme zumindest einen Wellenleiter enthält, und
   zumindest ein $\lambda/2$-Plättchen (11), welches im Strahlengang des Interferometers zwischen zwei Abschnitten des Wellenleiters angeordnet ist,
   wobei das Verfahren zumindest folgende Schritte umfasst,
   Aufheizen von zumindest einem Abschnitt des zumindest einen Wellenleiters (16, 17) im Strahlengang vor (12,14) und hinter (13, 15) dem $\lambda/2$-Plättchen (11) auf eine vorgebbare Temperatur, wobei
   wenigstens der eine Abschnitt hinter (13, 15) dem $\lambda/2$-Plättchen (11) auf eine erste Temperatur $T_1$ und
   wenigstens der eine Abschnitt vor (12, 14) dem $\lambda/2$-Plättchen (11) auf eine zweite Temperatur $T_2$ gebracht wird.

2. Verfahren nach Anspruch 1, **dadurch gekennzeichnet, dass** die Abschnitte hinter (13,15) und vor (12, 14) dem $\lambda/2$-Plättchen (11) jeweils die gleiche Länge $\delta|1$ aufweisen und $T_1$ vor 11n und $T_2$ folgende Bedingung erfüllen:

$$T_2 - T_1 = (B_{res}/B_{WG})*\Delta T_{Proc} * (L/\delta|1)_{\lambda}$$

und/oder

$$T_2 - T_1 = (B_{res}/B_{WG})*\Delta T_{Proc} * ((L+\Delta L)/\delta|1)$$

wobei

   $B_{res}$: die zu der verbleibenden polarisationsabhängigen Frequenzverschiebung korrespondierende Doppelbrechung,
   $B_{WG}$: die Doppelbrechung des Wellenleiters (16, 17),
   $\Delta T_{Proc}$: die Differenz aus der Endtemperatur des Herstellungsprozesses des Mach-Zehnder-Interferometers und der Raumtemperatur und
   $L$: die Länge des Wellenleiters (17) im kürseren Arm
   $L+\Delta L$: die Länge des Wellenieiters (16) im längeren Arm

darstellen.

3. Verfahren nach einem der Ansprüche 1 oder 2, welches weiterhin den folgenden Schritt umfasst: Einstellen der Differenz der optischen Weglänge ($\Delta L$) der Arme (16, 17) des Interferometers (10) auf einen vorgebbaren Wert, indem zumindest ein Abschnitt (13) des zumindest einen Wellenleiters im Arm (16) mit der größeren optischen Weglänge ($L+\Delta L$) dem $\lambda/2$-Plättchen (11) auf eine erste Temperatur $T_1$ gebracht wird hinter und
   zumindest ein Abschnitt(12) des zumindest einen Wellenleiters im Arm (16) mit der größeren optischen Weglänge ($L+\Delta L$) vor dem $\lambda/2$-Plättchen (11) auf eine zweite Temperatur $T_2$ gebracht wird.

4. Verfahren nach Anspruch 3, **dadurch gekennzeichnet, dass** die Abschnitte (13,15) auf der einen Seite des $\lambda/2$-

Plättchens (11) auf eine Temperatur $T_{DLI}$ - $\Delta T/2$ und die Abschnitte (12,14) auf der anderen Seite des $\lambda/2$-Plättchens (11) auf eine Temperatur $T_{DLI}$ + $\Delta T/2$ gebracht werden, wobei

$T_{DLI}$: die zur Einstellung der Differenz der optischen Weglängen erforderliche Temperatur und
$\Delta T$: die zur Kompensation der polarisationsabhängige Frequenzverschiebung erforderliche Temperaturdifferenz

darstellen.

5.  Verfahren nach einem der Ansprüche 1 bis 4, bei welchem in beiden Armen des Interferometers (10) ein $\lambda/2$-Plättchen (11) angeordnet ist und die polarisationsabhängige Frequenzverschiebung des Interferometers kompensiert wird, indem sowohl im längeren Arm, als auch im kürzeren Arm des Interferometers (10) die Wellenleiter (16, 17) vor und hinter dem $\lambda/2$-Plättchen (11) wenigstens abschnittsweise auf vorgebbare Temperaturen gebracht werden.

6.  Verfahren nach Anspruch 1, **dadurch gekennzeichnet, dass** der zumindest eine Abschnitt (13) des längeren Arms des Interferometers (10) hinter dem $\lambda/2$-Plättchen (11) und der zumindest eine Abschnitt (15) des kürzeren Arms des Interferometers (10) hinter dem $\lambda/2$-Plättchen (11) auf eine erste Temperatur gebracht werden und der zumindest eine Abschnitt (12) des längeren Arms des Interferometers (10) vor dem $\lambda/2$-Plättchen (11) und der zumindest eine Abschnitt (14) des kürzeren Arms des Interferometers (10) vor dem $\lambda/2$-Plättchen (11) auf eine zweite Temperatur gebracht werden.

7.  Verfahren nach Anspruch 6, **dadurch gekennzeichnet, dass** die Abschnitte (12,13) des längeren Arms (16) des Interferometers (10) vor und hinter dem $\lambda/2$-Plättchen (11), welche auf vorgebbare Temperaturen gebracht werden, jeweils die Gesamtlänge $\delta|1$ aufweisen und die Abschnitte (14,15) des kürzeren Arms (17) des Interferometers (10) vor und dem $\lambda/2$-Plättchen (11), welche auf vorgebbare hinter Temperaturen gebracht werden, jeweils die Gesamtlänge $\delta|2 = \delta|1*L/(L + \Delta L)$ aufweisen, wobei L die Länge des Wellenleiters im kürseren Arms des Interferometers und (L+$\Delta$L) die Länge des Wellenleiters im lärgeren Arms des Interferometers bezeichnen.

8.  Mach-Zehnder- Interferometer (10) mit einem längeren Arm (16) der Länge (L+$\Delta$L) und einem kürzeren Arm (17) der Länge L, welche jeweils mindestens einen Wellenleiter umfassen, wobei in beiden Armen des Interferometers (10) ein $\lambda/2$-Plättchen (11) angeordnet ist und die Wellenleiter (16, 17) beider Arme des Interferometers (10) vor und hinter dem $\lambda/2$-Plättchen (11) in Wärmeaustauschkontakt mit jeweils wenigstens einem Heizelement (12, 13, 14, 15) stehen, **dadurch gekennzeichnet, dass** die im Arm mit der größeren optischen Weglänge (16) des Interferometers (10) angeordneten Heizelemente (12, 13) vor und hinter dem $\lambda/2$-Plättchen (11) jeweils die Länge $\delta|1$ und die im anderen Arm (17) des Interferometers (10) angeordneten Heizelemente (14, 15) vor und hinter dem $\lambda/2$-Plättchen (11) jeweils die Länge $\delta|2 = \delta|1*L/(L+ \Delta L)$ aufweisen.

9.  Interferometer nach Anspruch 8, **dadurch gekennzeichnet, dass** es sich bei den Heizelementen (12, 13) um Heizelektroden handelt.

10. Interferometer nach einem der Ansprüche 8 bis 9, **dadurch gekennzeichnet, dass** dieses mit einer Datenverarbeitungseinrichtung zur Steuerung der Temperaturen der Heizelemente (12, 13, 14, 15) kombiniert ist.

11. Integrierter Schaltkreis mit einem Interferometer nach einem der Ansprüche 8 bis 11.

## Claims

1.  A method for compensating the polarization-dependent shift of the center frequency in an optical filter by at least partial compensation of the double refraction of the filter, the filter including the following elements:

a Mach-Zehnder interferometer (10) which contains a longer arm (16) and a shorter arm (17), wherein at least one of these arms contains at least one waveguide, and
at least one $\lambda/2$ plate (11) which is arranged in the optical path of the interferometer between two sections of the waveguide,
wherein the method comprises at least the following steps:

heating at least one section of the at least one waveguide (16, 17) in the optical path in front of (12,14) and behind (13, 15) the $\lambda/2$ plate (11) to a temperature which can be predetermined, wherein
at least one section behind (13, 15) the $\lambda/2$ plate (11) is brought to a first temperature $T_1$ and
at least one section in front of (12, 14) the $\lambda/2$ plate (11) is brought to a second temperature $T_2$.

2. The method according to claim 1, **characterized in that** the sections behind (13, 15) and in front of (12, 14) the $\lambda/2$ plate (11) have an equal length 8/1 each and $T_1$ and $T_2$ comply with the following condition:

$$T_2 - T_1 = (B_{res}/B_{WG})^*\Delta T_{Proc} * (L/\delta|1)$$

and/or

$$T_2 - T_1 = (B_{res}/B_{WG})^*\Delta T_{Proc} * ((L+\Delta L)/\delta|1)$$

wherein

$B_{res}$: is the double refraction corresponding to the remaining polarization-dependent frequency shift,
$B_{WG}$: is the double refraction of the waveguide (16, 17),
$\Delta T_{Proc}$: is the difference between the final temperature of the manufacturing process of the Mach-Zehnder interferometer and the room temperature and
L: is the length of the waveguide (17) in the shorter arm,
$L+\Delta L$: is the length of the waveguide (16) in the longer arm.

3. The method according to claim 1 or 2, which also comprises the following step: adjusting the difference of the optical path length ($\Delta L$) of the arms (16, 17) of the interferometer (10) to a value which can be predetermined by
bringing at least one section (13) of the at least one waveguide in the arm (16) having the longer optical wavelength ($L+\Delta L$) behind the $\lambda/2$ plate (11) to a first temperature $T_1$, and
bringing at least one section (12) of the at least one waveguide in the arm (16) having the longer optical wavelength ($L+\Delta L$) in front of the $\lambda/2$ plate (11) to a second temperature $T_2$.

4. The method according to claim 3, **characterized in that** the sections (13, 15) on the one side of the $\lambda/2$ plate (11) are brought to a temperature $T_{DLI} - \Delta T/2$ and the sections (12, 14) on the other side of the $\lambda/2$ plate are brought to a temperature $T_{DLI} + \Delta T/2$, wherein

$T_{DLI}$: is the temperature necessary to adjust the difference of the optical wavelengths and
$\Delta T$: is the temperature difference necessary to compensate for the polarization-dependent frequency shift.

5. The method according to any of claims 1 to 4, wherein in both arms of the interferometer (10) a $\lambda/2$ plate (11) is arranged and the polarization-dependent frequency shift of the interferometer is compensated for by bringing the waveguides (16, 17) in front of and behind the $\lambda/2$ plate (11) at least section-wise to temperatures which can be predetermined in both the longer arm and the shorter arm of the interferometer (10).

6. The method according to claim 1, **characterized in that** the at least one section (13) of the longer arm of the interferometer (10) behind the $\lambda/2$ plate (11) and the at least one section (15) of the shorter arm of the interferometer (10) behind the $\lambda/2$ plate (11) are brought to a first temperature and the at least one section (12) of the longer arm of the interferometer (10) in front of the $\lambda/2$ plate (11) and the at least one section (14) of the shorter arm of the interferometer (10) in front of the $\lambda/2$ plate (11) are brought to a second temperature.

7. The method according to claim 6, **characterized in that** sections (12, 13) of the longer arm (16) of the interferometer (10) in front of and behind the $\lambda/2$ plate (11), which are brought to temperatures that can be predetermined, have a total length $\delta|1$ each and
sections (14, 15) of the shorter arm (17) of the interferometer (10) in front of and behind the $\lambda/2$ plate (11), which are bought to temperatures that can be predetermined, have a total length $\delta|2 = \delta|1*L/(L + \Delta L)$ each, wherein
L is the length of the waveguide in the shorter arm of the interferometer and ($L+\Delta L$) is the length of the waveguide in the longer arm of the interferometer.

8. A Mach-Zehnder interferometer (10) comprising a longer arm (16) having a length (L+ΔL) and a shorter arm (17) having a length L, each comprising at least one waveguide, wherein a λ/2 plate (11) is arranged in both arms of the interferometer (10) and the waveguides (16, 17) of both arms of the interferometer (10) in front of and behind the λ/2 plate (11) are in heat exchange contact with at least one heating element (12, 13, 14, 15) each, **characterized in that** the heating elements (12, 13) arranged in the arm having the longer optical wavelength (16) of the interferometer (10) in front of and behind the λ/2 plate (11) have a length δ|1 each and the heating elements (14, 15) which are arranged in the other arm (17) of the interferometer (10) in front of and behind the λ/2 plate (11) have a length δ|2 = δ|1*L/(L + ΔL) each.

9. The interferometer according to claim 8, **characterized in that** the heating elements (12, 13) are heating electrodes.

10. The interferometer according to any of claims 8 to 9, **characterized in that** it can be combined with a data processing device for controlling the temperatures of the heating elements (12, 13, 14, 15).

11. An integrated circuit including an interferometer according to any of claims 8 to 10.


**Revendications**

1. Procédé pour la compensation du décalage, dépendant de la polarisation, de la fréquence moyenne dans un filtre optique, par compensation au moins partielle de la biréfringence du filtre, ledit filtre comprenant les éléments suivants :

   un interféromètre de Mach-Zehnder (10) qui contient un bras long (16) et un bras court (17), l'un au moins desdits bras contenant au moins un guide d'onde, et au moins une plaquette à λ/2 (11), qui est agencée dans le trajet des rayons de l'interféromètre entre deux tronçons du guide d'onde,
   ledit procédé comprenant au moins les étapes suivantes :

   chauffage d'au moins un tronçon dudit au moins un guide d'onde (16, 17) dans le trajet des rayons devant (12, 14) et derrière (13, 15) la plaquette à λ/2 (11) à une température prédéterminée, dans lequel au moins le tronçon derrière (13, 15) la plaquette à λ/2 (11) est amené à une première température $T_1$, et
   au moins le tronçon devant (12, 14) la plaquette à λ/2 (11) est amené à une seconde température $T_2$.

2. Procédé selon la revendication 1, **caractérisé en ce que** les tronçons derrière (13, 15) et devant (12, 14) la plaquette à λ/2 (11) ont chacun la même longueur δ|1, et $T_1$ et $T_2$ satisfont les conditions suivantes :

$$T_2 - T_1 = (B_{res}/B_{WG})*\Delta T_{Proc} * (L/\delta|1)$$

et/ou

$$T_2 - T_1 = (B_{res}/B_{WG})*\Delta T_{Proc} * ((L+\Delta L)/\delta|1)$$

dans lesquelles
$B_{res}$ représente la biréfringence correspondant au décalage de fréquence résiduel dépendant de la polarisation,
$B_{WG}$ représente la biréfringence du guide d'ondes (16, 17),
$\Delta T_{Proc}$ représente la différence de la température finale du processus de fabrication de l'interféromètre de Mach-Zehnder et la température ambiante, et
L représente la longueur du guide d'onde (17) dans le bras court et
L + ΔL représente la longueur du guide d'onde (16) dans le bras long.

3. Procédé selon l'une des revendications 1 ou 2, qui comprend en outre l'étape suivante : établissement de la différence de longueur de trajet optique (ΔL) des bras (16, 17) de l'interféromètre (10) à une valeur prédéterminée, en amenant

au moins un tronçon (13) d'au moins un guide d'onde dans le bras (16) avec la plus grande longueur de trajet optique (L+∆L) derrière la plaquette à λ/2 (11) à une première température $T_1$, et

au moins un tronçon (12) d'au moins un guide d'onde dans le bras (16) avec la plus grande longueur de trajet optique (L+∆L) devant la plaquette à λ/2 (11) à une seconde température $T_2$.

4. Procédé selon la revendication 3, **caractérisé en ce que** les tronçons (13, 15) sur un côté de la plaquette à λ/2 (11) sont amenés à une température $T_{DLI}$ - ∆T/2, et les tronçons (12, 14) sur l'autre côté de la plaquette à λ/2 (11) sont amenés à une température $T_{DLI}$ + ∆T/2, dans lesquelles

$T_{DLI}$ représente la température nécessaire pour établir la différence de longueur de trajet optique, et

∆T représente la différence de température nécessaire pour la compensation du décalage de fréquence dépendant de la température.

5. Procédé selon l'une des revendications 1 à 4, dans lequel une plaquette à λ/2 (11) est agencée dans les deux bras de l'interféromètre (10), et le décalage de fréquence, dépendant de la polarisation, de l'interféromètre est compensé en amenant, aussi bien dans le bras long que dans le bras court de l'interféromètre (10), les guides d'onde (16, 17) devant et derrière la plaquette à λ/2 (11) au moins par tronçon à des températures prédéterminées.

6. Procédé selon la revendication 1, **caractérisé en ce que** ledit au moins un tronçon (13) du bras long de l'interféromètre (10) derrière la plaquette à λ/2 (11) et ledit au moins un tronçon (15) du bras court de l'interféromètre (10) derrière la plaquette à λ/2 (11) sont amenés à une première température, et ledit au moins un tronçon (12) du bras long de l'interféromètre (10) devant la plaquette à λ/2 (11) et ledit au moins un tronçon (14) du bras court de l'interféromètre (10) devant la plaquette à λ/2 (11) sont amenés à une seconde température.

7. Procédé selon la revendication 6, **caractérisé en ce que** les tronçons (12, 13) du bras long (16) de l'interféromètre (10) devant et derrière la plaquette à λ/2 (11), qui sont amenés à une température prédéterminée, présentent chacun la longueur totale δ|1, et

les tronçons (14, 15) du bras court (17) de l'interféromètre devant et derrière la plaquette à λ/2 (11), qui sont amenés à une température prédéterminée, présentent chacun la longueur totale δ|2 = δ|1*L/(L+∆L), telle que

L représente la longueur du guide d'onde dans le bras court de l'interféromètre, et

(L+∆L) représente la longueur du guide d'onde dans le bras long de l'interféromètre.

8. Interféromètre de Mach-Zehnder (10) comprenant un bras long (16) avec la longueur (L+∆L) et un bras court (17) avec la longueur L, qui comprennent chacun au moins un guide d'onde, et dans les deux bras de l'interféromètre (10) est agencée une plaquette à λ/2 (11), et les guides d'onde (16, 17) des deux bras de l'interféromètre (10) devant et derrière la plaquette à λ/2 (11) sont en contact d'échange thermique avec au moins un élément chauffant respectif (12, 13, 14, 15), **caractérisé en ce que** les éléments chauffants (12, 13) agencés dans le bras de l'interféromètre (10) présentant le trajet optique le plus long (16) devant et derrière la plaquette à λ/2 ont chacun la longueur δ|1, et les éléments chauffants (14, 15) agencés dans l'autre bras (17) de l'interféromètre (10) devant et derrière la plaquette à λ/2 (11) ont chacun la longueur δ|2 = δ|1*L/(L+∆L).

9. Interféromètre selon la revendication 8, **caractérisé en ce que** les éléments chauffants (12, 13) sont des électrodes chauffantes.

10. Interféromètre selon l'une des revendications 8 à 9, **caractérisé en ce que** celui-ci est combiné avec un système de traitement de données pour commander la température des éléments chauffants (12, 13, 14, 15).

11. Circuit intégré avec un interféromètre selon l'une des revendications 8 à 10.

Fig. 1

Fig. 2

**EP 2 162 788 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1286192 A2